# EUROPÄISCHE PATENTANMELDUNG

(11) **EP 1 894 979 A1**
(43) Veröffentlichungstag der Anmeldung: **05.03.2008**
(21) Anmeldenummer: 06119857.8
(22) Anmeldetag: 31.08.2006
(51) Int. Cl.: C09J 5/02

(54) **VOC-arme oder VOC-freie Haftvermittlerzusammensetzung**

(71) Anmelder: Sika Technology AG, 6340 Baar (CH)
(72) Erfinder: Corsaro, Antonio, 8046, Zürich (CH)

(57) **Zusammenfassung**

Die vorliegende Erfindung betrifft Haftvermittlerzusammensetzungen, welche mindestens einen Haftvermittler sowie mindestens ein bei Raumtemperatur flüssiges Trägermittel mit einem Siedepunkt von grösser als 250°C bei Normdruck oder einem Dampfdruck von weniger als 0.1 mbar bei 20°C, wobei der Anteil des Trägermittels 40 - 99 Gew.-%, bezogen auf das Gesamtgewicht der Zusammensetzung beträgt.

## Beschreibung

### Technisches Gebiet

Die Erfindung betrifft das Gebiet der VOC-freien oder VOC-armen Haftvermittlerzusammensetzungen.

### Stand der Technik

Haftvermittlerzusammensetzungen, insbesondere als Primer oder Haftvermittlervoranstriche, werden seit langem benutzt, um die Haftung von Klebstoffen, Dichtstoffen, Beschichtungen und Belägen auf dem Untergrund zu verbessern. Typischerweise werden Silane, Titanate und/oder Zirkonate als Haftvermittler in derartigen Zusammensetzungen verwendet.

Üblicherweise sind in derartigen Haftvermittlerzusammensetzungen grosse Mengen an flüchtigen Lösungsmitteln vorhanden. Zunehmend kommen jedoch derartige Haftvermittlerzusammensetzungen aufgrund der grossen Mengen an flüchtigen Lösungsmittel (VOC = Volatile Organic Compounds), die bei der Applikation frei werden, unter Druck. Deshalb ist im Markt ein grosses Bedürfnis nach VOC-freien oder zumindest VOC-armen Haftvermittlerzusammensetzungen vorhanden.

### Darstellung der Erfindung

Aufgabe der vorliegenden Erfindung ist es daher, eine Haftvermittlerzusammensetzung zur Verfügung zu stellen, welche keine flüchtigen Lösungsmittel als wesentlichen Bestandteil aufweist und trotzdem, insbesondere als Primer oder als Haftvermittlervoranstrich, bereits nach kurzer Zeit mit einer Klebstoff-, Dichtstoff-, Beschichtungs- oder Belagzusammensetzung kontaktiert werden kann.

Es hat sich gezeigt, dass eine Haftvermittlerzusammensetzung gemäss Anspruch 1 diese Aufgabe erfüllen kann. Diese Haftvermittlerzusammensetzungen weisen sehr gute Haftung auf unterschiedlichen Untergründen, insbesondere auf Glas und Keramik, auf so dass sie sich speziell gut für das Verkleben von Scheiben im Fahrzeugbau eignen. Es stellte sich weiterhin überraschenderweise heraus, dass ein Auftrag eines Klebstoffes oder des Dichtstoffes in den meisten Fällen auch direkt auf den noch feuchten Haftvermittlerzusammensetzungsfilm, d.h. "nass in nass", möglich ist, ohne dass dies bemerkenswerte Nachteile in der Haftung oder der Mechanik des ausgehärteten Dicht- oder Klebstoffes zur Folge hätte.

### Wege zur Ausführung der Erfindung

Die vorliegende Erfindung betrifft Haftvermittlerzusammensetzungen, welche mindestens einen Haftvermittler, sowie mindestens ein bei Raumtemperatur flüssiges Trägermittel enthalten. Das bei Raumtemperatur flüssige Trägermittel weist einen Siedepunkt von grösser als 250°C bei Normdruck oder einen Dampfdruck von weniger als 0.1 mbar bei 20°C auf.

Weiterhin beträgt der Anteil des Trägermittels 40 - 99 Gew.-%, bezogen auf das Gesamtgewicht der Zusammensetzung.

Der Term "bei Raumtemperatur flüssig" bedeutet im vorliegenden Dokument "bei 25°C selbstfliessend".

Es gibt sehr viele unterschiedliche Definitionen von "flüchtigen organischen Verbindungen" bzw. "VOC" (VOC = Volatile Organic Compounds). So wird beispielsweise VOC nach der EU-Richtline 2004/42/EG als eine organische Verbindung mit einem Siedepunkt von höchstens 250°C bei einem Standarddruck von 101,3 kPa definiert. Gemäss der Schweizer Verordnung über die Lenkungsabgabe auf flüchtige organische Verbindungen werden VOC als organische Verbindungen mit einem Dampfdruck von mindestens 0.1 mbar bei 20 °C oder einem Siedepunkt von höchstens 240°C bei 1013.25 mbar definiert. Im vorliegenden Dokument gelten als "flüchtige organische Verbindungen" oder "VOC" organische Verbindungen, welche einen Siedepunkt von höchstens 250°C bei Normdruck (1013 mbar) oder einen Dampfdruck von mindestens 0.1 mbar bei 20°C aufweisen.

Die Haftvermittlerzusammensetzung enthält einen Haftvermittler. Vorzugsweise ist der Haftvermittler ausgewählt aus der Gruppe bestehend aus Organo-Siliziumverbindungen, Organo-Titanverbindungen, Organo-Zirkoniumverbindungen und Mischungen daraus.

Die Organo-Siliziumverbindung weist hierbei mindestens eine an ein Siliziumatom gebundene Hydroxygruppe, Alkoxygruppe oder Acyloxygruppe sowie mindestens einen über eine Kohlenstoff-Silizium-Bindung an ein Siliziumatom gebundenen organischen Substituenten auf. Die Organo-Titanverbindung weist hierbei mindestens einen über eine Sauerstoff-Titan-Bindung an das Titanatom gebundenen Substituenten auf. Die Organo-Zirkoniumverbindung weist hierbei mindestens einen über eine Sauerstoff-Zirkonium-Bindung an das Zirkoniumatom gebundenen Substituenten auf.

Als Organo-Siliziumverbindungen sind besonders geeignet Organo-Siliziumverbindungen der Formeln (I) oder (II) oder (III) 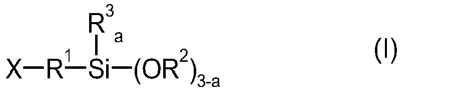 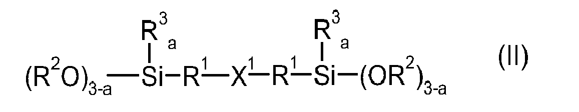 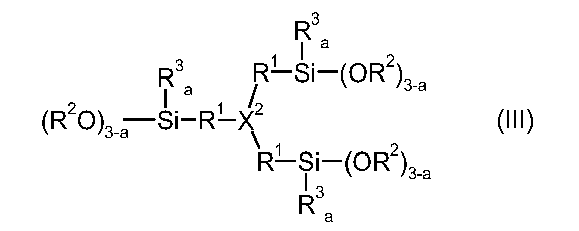 R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.
R² steht hierbei für H oder für eine Alkylgruppe mit 1 bis 5 C-Atomen, insbesondere für Methyl oder Ethyl, oder eine Acylgruppe, insbesondere für Acetyl.
R³ steht hierbei für eine Alkylgruppe mit 1 bis 8 C-Atomen, insbesondere Methyl.
X steht hierbei für H, oder für eine funktionelle Gruppe, welche ausgewählt ist aus der Gruppe umfassend Oxiran, OH, (Meth)acryloxy, Amin, SH, Acylthio und Vinyl, bevorzugt Amin, steht. Der Vollständigkeit halber wird erwähnt, dass unter Acylthio in diesem Dokument der Substituent 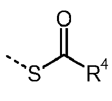 verstanden wird, wobei R⁴ für Alkyl, insbesondere mit 1 bis 20 Kohlenstoffatomen, steht und die gestrichelte Linie die Bindung zum Substituent R¹ darstellt.
X¹ steht hierbei für eine funktionelle Gruppe, welche ausgewählt ist aus der Gruppe umfassend NH, S, S₂ und S₄.
X² steht hierbei für eine funktionelle Gruppe, welche ausgewählt ist aus der Gruppe umfassend N und Isocyanurat.
a steht hierbei für einen der Werte 0, 1 oder 2, bevorzugt 0.

Der Substituent R¹ bedeutet insbesondere eine Methylen-, Propylen-, Methylpropylen-, Butylen- oder Dimethylbutylengruppe. Als besonders bevorzugt wird Propylengruppe als Substituent R¹.

Amino-, Mercapto- oder Oxiran-Gruppen aufweisenden Organo-Siliziumverbindungen werden auch als "Aminosilane", "Mercaptosilane" oder "Epoxysilane" bezeichnet.

Als Organo-Siliziumverbindungen der Formel (I) sind beispielsweise geeignet die Organo-Siliziumverbindungen ausgewählt aus der Gruppe umfassend
Octyltrimethoxysilan, Dodecyltrimethoxysilan, Hexadecyltrimethoxysilan, Methyl-octyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-tri-ethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, [3-(2-Aminoethylamino)-propyl]trimethoxysilan (= 4,7,10-Triazadecyl-trimethoxysilan), 2-Aminoethyl-trimethoxysilan, 2-Aminoethyl-dimethoxymethylsilan, Aminomethyl-trimethoxysilan, Aminomethyldimethoxymethylsilan, Aminomethylmethoxydimethylsilan, 7-Amino-4-oxa-heptyldimethoxymethylsilan, N-(Methyl)-3-aminopropyltrimethoxysilan, N-(n-butyl)-3-aminopropyltrimethoxysilan; 3-Mercaptopropyltriethoxysilan, 3-Mercaptopropyltrimethoxysilan, 3-Mercaptopropyl-methyldimethoxysilan; 3-Acylthiopropyltrimethoxysilan; Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.

Bevorzugt sind bei diesen genannten Organo-Siliziumverbindungen diejenige, welche einen an das Siliziumatom gebundenen organischen Substituenten aufweisen, welcher zusätzlich noch eine funktionelle Gruppe aufweisen, das heisst, welcher keine Alkylgruppe ist, und einer Formel (I) entsprechen, in welcher X nicht H ist.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11 -tetrathia-4-15-disilaoctadecan (Bis(triethoxysilylpropyl)polysulfid oder Bis(triethoxysilylpropyl)tetrasulfan), Bis(triethoxysilylpropyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris[3-(trimethoxysilyl)propyl]-1,3,5-triazine-2,4,6(1H,3H,5H)-trionharnstoff (=Tris(3-(trimethoxysilyl)propyl)isocyanurat) und 1,3,5-tris[3-(triethoxysilyl)propyl]-1 ,3,5-triazine-2,4,6(1 H,3H,5H)-trion-harnstoff (=Tris(3-(triethoxysilyl)propyl)isocyanurat).

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Als über eine Sauerstoff-Titan-Bindung an das Titanatom gebundenen Substituenten sind besonders geeignete Substituenten sind diejenigen, welche aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind.

Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (IV), besonders geeignet erwiesen.

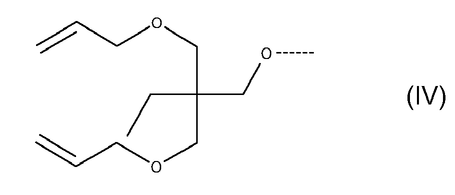

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (V)

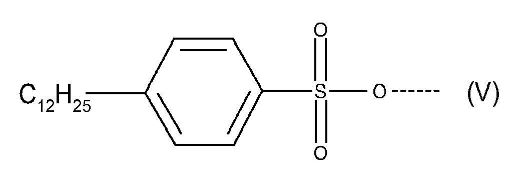

Besonders geeignet als Carboxylatgruppen haben sich insbesondere Carboxylate von Fettsäuren erwiesen. Als bevorzugte Carboxylate gilt Decanoat.

In obigen Formeln stellt die gestrichelte Linie die Bindung des Sauerstoffs zum Titan dar.

Organo-Titanverbindungen sind kommerziell erhältlich, beispielsweise bei der Firma Kenrich Petrochemicals oder DuPont. Beispiele für geeignete Organo-Titanverbindungenverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-105, TE, ETAM, OGT von DuPont.

Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.

Als besonders bevorzugt sind Organo-Titanverbindungen mit über eine Sauerstoff-Titan-Bindung an das Titanatom gebundenen Substituenten der Formeln (IV) und/oder (V).

Als Organo-Zirkoniumverbindungen sind insbesondere solche geeignet, welche mindestens eine funktionelle Gruppe tragen, welche ausgewählt ist aus der Gruppe umfassend Alkoxygruppe, Sulfonatgruppe, Carboxylatgruppe, Phosphat oder Mischungen davon trägt, und welche über ein Sauerstoff-Zirkonium-Bindung direkt an ein Zirkoniumatom gebunden ist.

Als Alkoxygruppen haben sich insbesondere Isopropoxy- und sogenannte Neoalkoxy-Substituenten, insbesondere der Formel (IV), besonders geeignet erwiesen

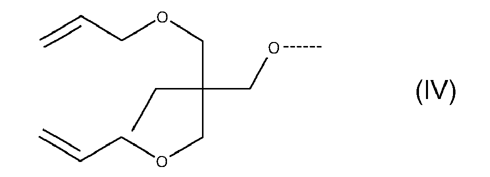

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der Formel (V)

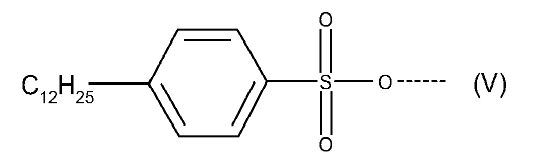

Als Carboxylatgruppen haben sich insbesondere Carboxylate von Fettsäuren besonders geeignet erwiesen. Als bevorzugte Carboxylate gelten Stearate und Isostearate.

In obigen Formeln stellt die gestrichelte Linie die Bindung des Sauerstoffs zum Zirkonium dar.

Organo-Zirkoniumverbindungen sind kommerziell erhältlich, beispielsweise bei der Firma Kenrich Petrochemicals. Beispiele für geeignete Organo-Titanverbindungenverbindungen sind beispielsweise Ken-React® NZ 38J, NZ TPPJ, KZ OPPR, KZ TPP, NZ 01, NZ 09, NZ 12, NZ38, NZ 44, NZ 97.

Es ist dem Fachmann klar, dass diese Organo-Siliziumverbindungen, Organo-Titanverbindungen und Organo-Zirkoniumverbindungen unter dem Einfluss von Wasser hydrolysieren und an das Si-, Ti- oder Zr-Atom gebundene OH-Gruppen bilden. Derartige hydrolysierte, beziehungsweise teilhydrolysierte, Organo-Siliziumverbindungen, Organo-Titanverbindungen und Organo-Zirkoniumverbindungen können dann ihrerseits kondensieren und Kondensationsprodukte bilden, welche Si-O-Si, Ti-O-Ti, Zr-O-Zr Bindungen aufweisen. Sind Silane und/oder Titanate und/oder Zirkonate als Haftvermittler gemischt sind auch gemischte Kondensationsprodukte möglich, welche Si-O-Ti, Si-O-Zr oder Ti-O-Zr Bindungen aufweisen. Ein geringer Anteil an derartigen Kondensationsprodukten ist möglich, insbesondere wenn sie löslich, emulgierbar oder dispergierbar sind.

Bevorzugt umfasst die Haftvermittlerzusammensetzung mindestens eine Organo-Siliziumverbindung und mindestens eine Organo-Titanverbindung.

Die Haftvermittlerzusammensetzung enthält weiterhin mindestens ein bei Raumtemperatur flüssiges Trägermittel mit einem Siedepunkt von grösser als 250°C bei Normdruck oder einem Dampfdruck von weniger als 0.1 mbar bei 20°C. Das Trägermittel ist somit kein VOC gemäss der in diesem Dokument verwendeten Definition.

Als Trägermittel geeignet sind einerseits Weichmacher mit einem Siedepunkt von grösser als 250°C bei Normdruck oder einem Dampfdruck von weniger als 0.1 mbar bei 20°C.

Insbesondere sind die Weichmacher ausgewählt aus der Gruppe bestehend aus Ester der Phthalsäuren, Ester der aliphatischen Dicarbonsäure und Fettsäureester und organische Ester der Phosphorsäuren. Als Ester der Phthalsäuren sind insbesondere die Dialkylphthalate, vorzugsweise die Diester der Phthalsäure und der C₈ - C₁₆-Alkohle, insbesondere Dioctylphthalat (DOP), Diisononylphthalat (DINP) und Düsodecylphthalat (DIDP) geeignet.

Ester der aliphatischen Dicarbonsäuren sind insbesondere die Ester der Adipinsäure oder der Sebacinsäure, wie beispielsweise Dioctyladipat (DOA), Diisodecyladipat (DIDA).

Es können auch Polyester verwendet werden können, wie beispielsweise Polyester von Adipinsäure oder Sebacinsäure mit Diolen, wie beispielsweise Hexandiol oder Butandiol, mit der Massgabe, dass diese Polyester bei Raumtemperatur flüssig sind.

Als Trägermittel geeignet sind andererseits organische Lösungsmittel mit einem Siedepunkt von grösser als 250°C bei Normdruck oder einem Dampfdruck von weniger als 0.1 mbar bei 20°C.

Insbesondere handelt es sich hierbei um ein Lösungsmittel ausgewählt aus der Gruppe bestehend aus Ether, Ester, Kohlenwasserstoffe, Ketone, Aldehyde, Amide.

Als Ether sind insbesondere Alkoxy-abgeschlossene Polyole, insbesondere Alkoxy-abgeschlossene Polyoxyalkylenpolyole, auch Alkoxyterminierte Polyetherpolyole genannt. Beispiele hierfür sind Polypropylenglycol-Dialkylether oder Polyethylenglycol-Dialkylether. Beispiele hierfür sind Tetraglyme (Tetraethylenglycoldimethylether), Pentaglyme (Pentaethylenglycoldimethylether), Hexaglyme (Hexaethylenglycoldimethylether), Polyethylenglycoldimethylether, beispielsweise wie sie von Clariant unter den Namen Polyglykol DME 200 oder Polyglykol DME 250 kommerziell vertrieben werden, Diethylenglycoldibutylether, Polypropylenglykoldimethylether, Polyproproylenglykoldibutylether, Polyethylenglycolmonomethylethermonoacetat und Polypropylenglycolmonomethylethermonoacetat. Polypropylenglycol-Diether haben gegenüber den entsprechenden Polyethylenglycol-Diether den Vorteil, dass sie typischerweise über ein besseres Lösungsverhalten sowie bei höheren Molekulargewichten noch flüssig sind.

Als Ester insbesondere geeignet sind Ester der Kohlensäure oder Monocarbonsäuren oder Polycarbonsäuren. Als Ester der Kohlensäure sind insbesondere die Dialkylcarbonate zu nennen.

Als Ester der Monocarbonsäuren sind vor allem Ester von niedermolekularen Monocarbonsäuren, insbesondere C₁- bis C₆-Carbonsäuren, mit Fettalkoholen sowie Ester von niedermolekularen Alkoholen, insbesondere C₁- bis C₆-Alkoholen, mit Fettsäuren zu nennen. Beispiele hierfür sind Laurinsäuremethylester, Laurinsäureethylester, Myrstinsäuremethylester und Laurylacetat.

Weiterhin sind Ester von Carbonsäuren mit Polyethylenglykolen oder Polypropylenglykolen geeignet.

Weiterhin geeignete Ester sind organische Phosphonate und Phosphate.

Weiterhin geeignet sind cyclische Ester, d.h. Lactone.

Als Amide sind insbesondere Fettsäureamide oder cyclische Amide, d.h. Lactame geeignet.

Bei all diesen Lösungsmitteln gilt die mit der Massgabe, dass sie bei Raumtemperatur flüssig sind.

Es ist besonders vorteilhaft, wenn das Trägermittel keine reaktiven Gruppen aufweist. Insbesondere keine Gruppen, welche mit dem Haftvermittler reagieren. Meist bevorzugt weist das Trägermittel keine Isocyanat-reaktive Gruppen auf.

Es ist von Vorteil, wenn das bei Raumtemperatur flüssiges Trägermittel ein Lösungsmittel ist, welches in der Lage ist, die Haftvermittler zu lösen.

Es kann durchaus von Vorteil sein, insbesondere wenn die Haftvermittler nicht oder zu wenig löslich im Trägermittel sind, dass Tenside, insbesondere in der Form als Emulgator und/oder Co-Emulgator, Bestandteile der Haftvermittlerzusammensetzungen sind.

Weiterhin kann es vorteilhaft sein, wenn die Zusammensetzung einen Füllstoff enthält. Der Füllstoff kann anorganisch oder organisch sein. Es ist besonders vorteilhaft, wenn der Füllstoff einen Partikeldurchmesser von weniger als 100 Mikrometer, insbesondere von weniger als 1 Mikrometer, aufweist. Besonders bevorzugt sind Russe, Kreide, insbesondere beschichtete Kreiden, und unterschiedliche Formen von Siliziumdioxid, wie Quarzmehl, colloidale oder pyrogene Kieselsäuren, bevorzugt pyrogene Kieselsäuren. Als meist bevorzugter Füllstoff gilt Russ (carbon black). Die Verwendung von Füllstoffen ist insbesondere für die mechanische Verstärkung der Haftvermittlerzusammensetzung geeignet. Weiterhin lassen sich unter Verwendung von Füllstoffen dickschichtigere Applikationen realisieren.

Wenn es sich bei der Haftvermittlerzusammensetzung um einen Primer handelt, ist es vorteilhaft, dass zusätzliches mindestens ein organisches Bindemittel eingesetzt wird. Hierbei kann es sich beispielsweise um ein Epoxidharz, ein Isocyanathaltige Prepolymere oder Poly(meth)acrylate handeln.

Die Zusammensetzung kann zusätzlich auch noch weitere Bestandteile aufweisen. Insbesondere handelt es sich hierbei um Pigmente, Farbstoffe, Fluoreszenzindikatoren, Verlaufsadditive, Biocide, insbesondere Algicide oder Fungicide, Thixotropiermittel, Flammhemmer, Katalysatoren, insbesondere Säuren, und metallorganische Salze oder Komplexe, Stabilisatoren.

Die Haftvermittlerzusammensetzung weist vorzugsweise einen Anteil aller Haftvermittler von 1-25 Gew.-%, insbesondere 1-15 Gew.-%, bevorzugt 1-10 Gew.-%, bezogen auf das Gesamtgewicht der Zusammensetzung, auf.

Der Anteil des Füllstoffes beträgt vorzugsweise 1-25 Gew.-%, insbesondere 1-15 Gew.-%, bevorzugt 1-10 Gew.-%, bezogen auf das Gesamtgewicht der Zusammensetzung.

Es ist dem Fachmann klar, dass durch die Verwendung von Haftvermittlern, insbesondere von Organo-Siliziumverbindungen der Formeln (I) oder (II) oder (III) die Haftvermittlerzusammensetzung aufgrund der Haftvermittler, sowie der bei einer Hydrolyse entstehenden Hydrolyseprodukte, wie beispielsweise Ethanol oder Methanol, die Haftvermittlerzusammensetzung in der Regel nicht vollständig frei von VOC sind. Allerdings ist es erstrebenswert, dass der Gehalt an VOC möglichst gering ist. Insbesondere ist es vorteilhaft, wenn die Haftvermittlerzusammensetzung weniger als 5 Gew.-%, insbesondere 0 bis 2 Gew.-%, bevorzugt 0 bis 1 Gew.-%, meist bevorzugt 0 Gew.-%, jeweils bezogen auf das Gesamtgewicht der Zusammensetzung, an VOC, d.h. an organischen Substanzen, welche einen Siedepunkt von kleiner als 250°C bei Normdruck oder einem Dampfdruck von grösser als 0.1 mbar bei 20°C besitzen, aufweist.

Der Anteil des Trägermittels beträgt vorzugsweise 55 - 99 Gew.-%, insbesondere 70 - 99 Gew.-%, bezogen auf das Gesamtgewicht der Zusammensetzung.

Die Haftvermittlerzusammensetzungen lassen sich vielseitig verwenden. In einer besonders bevorzugten Ausführungsform stellen sie einen Primer oder einen Haftvermittlervoranstrich dar.

In einem weiteren Aspekt betrifft die vorliegende Erfindung ein Verfahren zur Verklebung oder zum Abdichten. Dieses Verfahren umfasst die folgenden Schritte:
i) Applikation einer Haftvermittlerzusammensetzung, wie sie vorgängig beschrieben wurde, auf ein zu verklebendes oder abzudichtendes Substrat **S1**
ii) Applikation eines Klebstoffes oder Dichtstoffes auf die Zusammensetzung, welche sich auf dem Substrat **S1** befindet
iii) Kontaktieren des Klebstoffs oder Dichtstoffes mit einem zweiten Substrat **S2;**
oder
i') Applikation einer Haftvermittlerzusammensetzung, wie sie vorgängig beschrieben wurde, auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der Zusammensetzung, welche sich auf dem Substrat **S1** befindet;
oder
i") Applikation einer Haftvermittlerzusammensetzung, wie sie vorgängig beschrieben wurde, auf ein zu verklebendes oder abzudichtendes Substrat **S1**
ii") Applikation eines Klebstoffes oder Dichtstoffes zwischen die Oberflächen des Substrates **S1** und **S2.**

Das zweite Substrat **S2** besteht hierbei aus demselben oder unterschiedlichem Material wie das Substrat **S1.**

Typischerweise schliesst sich anschliessend an den Schritt iii), iii') oder ii") ein Schritt iv) des Aushärtens des Kleb- oder Dichtstoffes an.

Als Kleb- oder Dichtstoff kann grundsätzlich jeder Klebstoff oder Dichtstoff verwendet werden. Die Auswahl richtet sich unter anderem nach der Offenzeit und den mechanischen Erfordernissen an den gebildeten Verbund. Es hat sich gezeigt, dass dieses Verfahren insbesondere gut für Polyurethan-Kleb- oder Dichtstoffe, insbesondere für Polyurethanklebstoffe, welche mindestens ein Isocyanatgruppen aufweisendes Polyurethanprepolymer enthalten, ist. Derartige Polyurethanklebstoffe härten unter dem Einfluss von Luftfeuchtigkeit über eine Vernetzungsreaktion der Isocyanatgruppen aus und sind kommerziell breit erhältlich, insbesondere unter dem Namen Sikaflex® von Sika Schweiz AG.

Vor dem Schritt ii), ii') oder ii") kann allenfalls ein Schritt des Abwischens mit einem trocknen Tuch (in der Fachsprache vielfach als "wipe off" bezeichnet) erfolgen.

Mit der Applikation des Klebstoffes oder Dichtstoffes kann zugewartet werden bis die Haftvermittlerzusammensetzung abgelüftet ist. Es hat sich jedoch erstaunlicherweise gezeigt, dass die Applikation des Klebstoffes oder des Dichtstoffes in den meisten Fällen auch direkt auf den noch feuchten Haftvermittlerzusammensetzungsfilm, d.h. "nass in nass", möglich ist, ohne dass dies bemerkenswerte Nachteile in der Haftung oder der Mechanik des ausgehärteten Dicht- oder Klebstoffes zur Folge hätte.

Das Substrat **S1** kann gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke. Insbesondere bevorzugt als Substrate **S1** oder **S2** sind Glas, Glaskeramik, Aluminium und Lacke, insbesondere in der Form als Automobillack.

Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Aus einem derartigen Verfahren zur Verklebung oder zum Abdichten resultiert ein Artikel. Da das Verfahren breit eingesetzt werden kann, zum Beispiel in der industriellen Verfertigung oder im Tief- oder Hochbau, ist auch dieser Artikel sehr vielfältiger Natur.

Insbesondere handelt es sich hierbei um einen Artikel, welcher ein Bauwerk, ein Industriegut oder ein Transportmittel ist. Insbesondere stellt er ein Gebäude, oder ein Teil davon dar. Oder der Artikel ist insbesondere ein Transportmittel, insbesondere ein Automobil, Bus, Lastkraftwagen, Schienenfahrzeug, Schiff oder ein Luftfahrzeug.

### Beispiele

Es wurden die folgenden Haftvermittlerzusammensetzungen gemäss Tabelle 1 hergestellt, indem der Haftvermittler dem Trägermittel zugegeben wurde und unter Stickstoff gut verrührt wurde.

Es wurden die folgenden Substanzen und Bezeichnungen verwendet:

| Handelsname *(Abkürzung für Tab.1)* | Chemische Bezeichnunq | Hersteller |
|---|---|---|
| Tetraethylenglykoldimethylether *(*"*TTEG-DME"*) | Tetraethylenglykoldimethylether | Clariant |
| Dipropylenglykoldimethylether *("DPG DME")* | Dipropylenglykoldimethylether | Clariant |
| Silquest® A1170 *("A1170")* | Bis(trimethoxysilylpropyl)amin | GE Silicones |
| Dynasylan® DAMO-T *("DAMO")* | N-(2-Aminoethyl)-3-aminopropyl-trimethoxysilan | Degussa |
| Silquest® A189 (*"A189*") | 3-Mercaptopropyltrimethoxysilan | GE Silicones |
| Silquest® A187 (*"A187"*) | 3-Glycidyloxypropyl-trimethoxysilan | GE Silicones |
| Ken-React® KR9S (*"KR9S"*) | Isopropyltridodecylbenzolsulfonyltitanat = Titaniumtris(dodecylbenzenesulfonate)iso-propoxide [61417-55-8] | Kenrich Petrochemical |
| BYK 33 (*"BYK33*") | Tensid | BYK Chemie |

Die Haftvermittlerzusammensetzungen wurden in dicht schliessende Glasflaschen gegeben und nach 1 Tag Lagerung bei Raumtemperatur für die Haftversuche verwendet.

**Tabelle 1. Zusammensetzungen von Haftvermittlerzusammensetzungen (Angaben in Gew.-%).**

| | ***Ref.1*** | ***1*** | ***2*** | **3** |
|---|---|---|---|---|
| *TTEG-DME* | | 96 | 95 | 92.5 |
| *DPG DME* | 96 | | | |
| *A1170* | 2 | 2 | 2 | |
| *DAMO* | | | | 2.3 |
| *A 189* | | | 1 | |
| *A187* | | | | 2.7 |
| *KR9S* | 2 | 2 | 2 | 2 |
| *BYK 33* | | | | 0.5 |

Die Vergleichszusammensetzung ***Ref.1*** enthält Dipropylenglykoldimethylether als Trägermittel. Dieses weist einen Siedpunkt von 175°C bei Normdruck und einen Dampfdruck von 0.77 mbar bei 20°C auf und stellt somit ein VOC gemäss der in diesem Dokument verwendeten Definition dar. Tetraethylenglykoldimethylether auf der anderen Seite weist einen Siedepunkt von 275°C bei Normdruck und einem Dampfdruck von weniger als 0.01 mbar auf und ist somit kein VOC.

Die Zusammensetzungen wurden nun auf verschiede Substrate mittels damit getränktem Zellulosetuch (Tela®, Tela-Kimberly Switzerland GmbH) appliziert. Nach 5 Sekunden wurde mit einem trockenen Zellulosetuch abgewischt ("Wipe off"). Innert 10 Minuten wurde anschliessend eine Rundraupe von SikaTack® Move Goes Cool ("*STMGC*") mittels Auspresskartusche und Düse aufgetragen. SikaTack® Move Goes Cool ist ein einkomponentiger feuchtigkeitshärtender Polyurethanklebstoff, welcher Polyurethanprepolymere mit Isocyanatgruppen enthält und bei Sika Schweiz AG kommerziell erhältlich ist.

Der Klebstoff wurde nach einer Aushärtezeit von 7 Tagen Klimaraumlagerung (,KL') (23°C, 50% rel. Luftfeuchtigkeit), sowie nach einer anschliessenden Wasserlagerung (,WL') in Wasser bei 23°C während 7 Tagen, sowie nach einer anschliessend Kataplasma-Lagerung (,CL') von 7 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch visuelle Bestimmung des kohäsiven Anteils der Haftfläche:

Je höher der Anteil an kohäsivem Bruch ist, umso besser wird die Verklebung eingeschätzt. Testresultate mit Kohäsionsbrüchen von weniger als 50 %, insbesondere weniger als 30 %, gelten typischerweise als ungenügend.

Als Substratuntergrund wurden verwendet
- Floatglass (Zinnseite für Haftungsprüfung verwendet), Rocholl, Deutschland
- VSG Keramik, Ferro 14279, Rocholl, Deutschland
- ESG Keramik, Ferro 14251, Rocholl, Deutschland

Alle Substratuntergründe wurden unmittelbar vor der Applikation der Haftvermittlerzusammensetzung durch Abwischen mittels eines Zellulosetuches (Tela®), welches mit einem Gemisch Isopropanol/Wasser (2:1) getränkt wurde, gereinigt und mindestens 2 Minuten vor der Applikation der Haftvermittlerzusammensetzung abgelüftet.

Tabelle 2 zeigt die Haftungsergebnisse der Zusammensetzungen auf unterschiedlichen Untergründen nach unterschiedlicher Lagerung.

**Tabelle. 2. Haftergebnisse von STMGC nach Vorbehandlung mit unterschiedlichen Haftvermittlerzusammensetzungen.**

| | Glas | | | ESG-Keramik | | | VSG-Keramik | | |
|---|---|---|---|---|---|---|---|---|---|
| | KL | WL | CL | KL | WL | CL | KL | WL | CL |
| ***Ref.1*** | 95 | 0 | 0 | n.m.¹ | n.m.¹ | n.m.¹ | n.m.¹ | n.m.¹ | n.m.¹ |
| ***1*** | 100 | 100 | 100 | 100 | 100 | 100 | 100 | 100 | 100 |
| ***2*** | 100 | 100 | 100 | 100 | 100 | 100 | 100 | 100 | 100 |
| ***3*** | 50 | 50 | 100 | 100 | 100 | 100 | 100 | 100 | 100 |

| | | | | | | | | | |
|---|---|---|---|---|---|---|---|---|---|
| ¹n.m. = nicht gemessen. | | | | | | | | | |

Für Tabelle 3 wurde gleich verfahren wie für Tabelle 2, ausser dass die Haftvermittlerzusammensetzung ***1*** mittels eines damit getränkten Zellulosetuches aufgetragen wurde und innert einer Minute danach direkt eine Rundraupe von SikaTack® Move Goes Cool nass-in-nass appliziert wurde. Es erfolgte somit für Tabelle 2 kein Abwischen mit einem trockenen Zellulosetuch ("Wipe off").

**Tabelle. 3. Haftergebnisse von STMGC nach Vorbehandlung mit Haftvermittlerzusammensetzung 1, ohne wipe off.**

| | Glas | | | ESG-Keramik | | | VSG-Keramik | | |
|---|---|---|---|---|---|---|---|---|---|
| | KL | WL | CL | KL | WL | CL | KL | WL | CL |
| ***1*** | 100 | 100 | 100 | 100 | 100 | 100 | 100 | 100 | 100 |

## Patentansprüche

1. Haftvermittlerzusammensetzung enthaltend
mindestens einen Haftvermittler;
mindestens ein bei Raumtemperatur flüssiges Trägermittel mit einem Siedepunkt von grösser als 250°C bei Normdruck oder einem Dampfdruck von weniger als 0.1 mbar bei 20°C;
wobei der Anteil des Trägermittels 40 - 99 Gew.-%, bezogen auf das Gesamtgewicht der Zusammensetzung, beträgt.

2. Haftvermittlerzusammensetzung gemäss Anspruch 1, **dadurch gekennzeichnet, dass** der Anteil des Trägermittels 55 - 99 Gew.-%, insbesondere 70 - 99 Gew.-%, bezogen auf das Gesamtgewicht der Zusammensetzung, beträgt.

3. Haftvermittlerzusammensetzung gemäss Anspruch 1 oder 2, **dadurch gekennzeichnet, dass** der Anteil aller Haftvermittler 1 - 25 Gew.-%, insbesondere 1-15 Gew.-%, bevorzugt 1-10 Gew.-%, bezogen auf das Gesamtgewicht der Zusammensetzung, beträgt.

4. Haftvermittlerzusammensetzung gemäss einem der vorhergehenden Ansprüche, **dadurch gekennzeichnet, dass** die Haftvermittlerzusammensetzung weiterhin mindestens einen Füllstoff, insbesondere Russ, enthält.

5. Haftvermittlerzusammensetzung gemäss Anspruch 4, **dadurch gekennzeichnet, dass** der Anteil des Füllstoffes 1 - 25 Gew.-%, insbesondere 1 - 15 Gew.-%, bevorzugt 1 - 10 Gew.-%, bezogen auf das Gesamtgewicht der Zusammensetzung, beträgt.

6. Haftvermittlerzusammensetzung gemäss einem der vorhergehenden Ansprüche, **dadurch gekennzeichnet, dass** das Trägermittel keine isocyanat-reaktiven Gruppen aufweist.

7. Haftvermittlerzusammensetzung gemäss einem der vorhergehenden Ansprüche, **dadurch gekennzeichnet, dass** die Haftvermittlerzusammensetzung weniger als 5 Gew.-%, insbesondere 0 bis 2 Gew.-%, bevorzugt 0 bis 1 Gew.-%, meist bevorzugt 0 Gew.-%, jeweils bezogen auf das Gesamtgewicht der Zusammensetzung, an organischen Substanzen aufweist, welche einen Siedepunkt von kleiner als 250°C bei Normdruck oder einem Dampfdruck von grösser als 0.1 mbar bei 20°C besitzen.

8. Haftvermittlerzusammensetzung gemäss einem der vorhergehenden Ansprüche, **dadurch gekennzeichnet, dass** das bei Raumtemperatur flüssige Trägermittel ein Lösungsmittel ist, welches in der Lage ist, die Haftvermittler zu lösen.

9. Haftvermittlerzusammensetzung gemäss einem der Ansprüche 1 bis 7, **dadurch gekennzeichnet**, das dass das bei Raumtemperatur flüssige Trägermittel ein Weichmacher ist.

10. Haftvermittlerzusammensetzung gemäss einem der vorhergehenden Ansprüche, **dadurch gekennzeichnet, dass** der Haftvermittler ausgewählt ist aus der Gruppe bestehend aus Organo-Siliziumverbindungen, Organo-Titanverbindungen, Organo-Zirkoniumverbindungen und Mischungen daraus.

11. Haftvermittlerzusammensetzung gemäss einem der vorhergehenden Ansprüche, **dadurch gekennzeichnet, dass** die Haftvermittlerzusammensetzung mindestes eine Organo-Siliziumverbindung und mindestens eine Organo-Titanverbindung enthält.

12. Haftvermittlerzusammensetzung gemäss einem der vorhergehenden Ansprüche, **dadurch gekennzeichnet, dass** die Haftvermittlerzusammensetzung mindestens zwei Organo-Siliziumverbindungen enthält.

13. Haftvermittlerzusammensetzung gemäss einem der Ansprüche 10 bis 12, **dadurch gekennzeichnet, dass** die Organo-Siliziumverbindung die Formel (I), (II) oder (III) aufweist 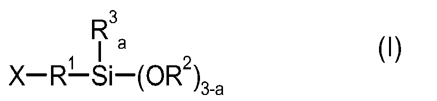 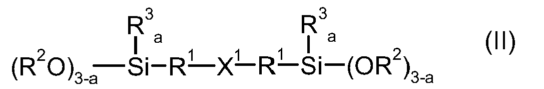 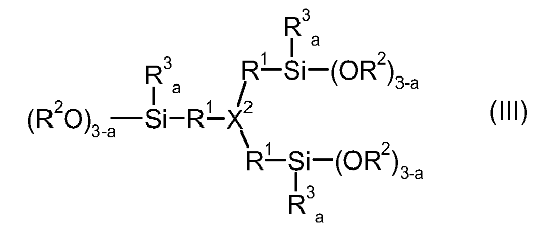 wobei
R¹ eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen darstellt; und
R² für H oder für eine Alkylgruppe mit 1 bis 5 C-Atomen, insbesondere für Methyl oder Ethyl, oder eine Acylgruppe steht; und
R³ für eine Alkylgruppe mit 1 bis 8 C-Atomen, insbesondere Methyl, steht; und
X für H, oder für eine funktionelle Gruppe, welche ausgewählt ist aus der Gruppe umfassend Oxiran, OH, (Meth)acryloxy, Amin, SH, Acylthio und Vinyl, bevorzugt Amin, steht; und
X¹ für eine funktionelle Gruppe, welche ausgewählt ist aus der Gruppe umfassend NH, S, S₂ und S₄, steht; und
X² für eine funktionelle Gruppe, welche ausgewählt ist aus der Gruppe umfassend N und Isocyanurat, steht; und
a für einen der Werte 0, 1 oder 2, bevorzugt 0, steht.

14. Haftvermittlerzusammensetzung gemäss einem der vorhergehenden Ansprüche, **dadurch gekennzeichnet, dass** die Haftvermittlerzusammensetzung weiterhin ein Tensid enthält.

15. Verfahren zur Verklebung oder zum Abdichten umfassend die Schritte
i) Applikation einer Haftvermittlerzusammensetzung gemäss einem der Ansprüche 1 bis 14 auf ein zu verklebendes oder abzudichtendes Substrat **S1**
ii) Applikation eines Klebstoffes oder Dichtstoffes auf die Zusammensetzung, welche sich auf dem Substrat **S1** befindet
iii) Kontaktieren des Klebstoffs oder Dichtstoffes mit einem zweiten Substrat **S2;**
oder
i') Applikation einer Haftvermittlerzusammensetzung gemäss einem der Ansprüche 1 bis 14 auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der Zusammensetzung, welche sich auf dem Substrat **S1** befindet;
oder
i") Applikation einer Haftvermittlerzusammensetzung gemäss einem der Ansprüche 1 bis 14 auf ein zu verklebendes oder abzudichtendes Substrat **S1**
ii") Applikation eines Klebstoffes oder Dichtstoffes zwischen die Oberflächen des Substrates **S1** und **S2,**
wobei das zweite Substrat **S2** aus demselben oder unterschiedlichem Material wie das Substrat **S1** besteht.

16. Verfahren gemäss Anspruch 15, **dadurch gekennzeichnet, dass** anschliessend an den Schritt iii), iii') oder ii") ein Schritt iv) des Aushärtens des Kleb- oder Dichtstoffes anschliesst.

17. Verfahren gemäss Anspruch 15 oder 16, **dadurch gekennzeichnet, dass** der Kleb- oder Dichtstoff ein Polyurethanklebstoff ist, welcher mindestens ein Isocyanatgruppen aufweisendes Polyurethanprepolymer enthält.

18. Artikel zu dessen Herstellung ein Verfahren gemäss einem der Ansprüche 15 bis 17 durchgeführt wird.

19. Artikel nach Anspruch 18, **dadurch gekennzeichnet, dass** der Artikel ein Bauwerk, ein Industriegut oder ein Transportmittel, insbesondere ein Gebäude, oder ein Teil davon, ist.

20. Artikel gemäss Anspruch 19, **dadurch gekennzeichnet, dass** der Artikel ein Transportmittel, insbesondere ein Automobil, Bus, Lastkraftwagen, Schienenfahrzeug, Schiff oder ein Luftfahrzeug ist.
